# EUROPEAN PATENT SPECIFICATION

(11) **EP 2 491 781 B1**
(45) Date of publication and mention of the grant of the patent: **08.10.2014**
(21) Application number: 12154435.7
(22) Date of filing: 08.02.2012
(51) Int. Cl.: A01D 34/74

(54) **Mower**
Mäher
Tondeuse

(30) Priority: 28.02.2011 JP 2011042247
(43) Date of publication of application: 29.08.2012
(73) Proprietor: ISEKI & CO., LTD., Matsuyama-shi Ehime-ken 799-2692 (JP)
(72) Inventor: Okamoto, Suguru, Iyo-gun, Ehime 791-2193 (JP); Enomoto, Wakao, Iyo-gun, Ehime 791-2193 (JP); Toda, Hirotaka, Iyo-gun, Ehime 791-2193 (JP); Kurita, Kazuyuki, Iyo-gun, Ehime 791-2193 (JP); Ishioka, Narutoshi, Iyo-gun, Ehime 791-2193 (JP)
(74) Representative: Grünecker, Kinkeldey, Stockmair & Schwanhäusser

(56) References cited:
- EP-A1- 2 145 520
- US-A- 5 410 865
- US-A1- 2004 093 840
- US-A1- 2005 044 836
- US-A1- 2008 302 077

## Description

### BACKGROUND OF THE INVENTION

### Field of the Invention

The present invention relates to a mower having a mower unit which is mounted on a vehicle body of the mower to be vertically movable, especially a mowing height adjusting device which adjusts the mowing height of the mower unit. Such a mower is known from US 2004/093840 A1 which corresponds to the preamble of claim 1.

### Related art of the Invention

The mowing operation is carried out by making the mower unit approach the ground, which is supported below the vehicle body to be vertically movable. When the mowing operation is carried, an operator adjusts the mowing height by changing an operating position of blades in the vertical direction for lawn. In the prior art, as shown in Japanese Patent No.4207743, when an operator turns the dial of a dial-type mowing height setter provided in the vicinity of a driver's seat, a rotary regulator for regulating a rotating range of link arms supporting the mower unit progressively is turned, and then a lowering position of the link arms is regulated, so that the mowing height of the mower unit is set. According to the above explained prior art, since the operator can change the mowing height of the mower unit, while remaining the state of sitting on the driver's seat, operation of the riding mower can be improved.

### SUMMARY OF THE INVENTION

### TECHNICAL PROBLEM

However, since the mower unit of the above explained mower is linked movably in vertical direction just after non-driven-type front wheels, the rotary regulator for regulating the rotating range of link arms is provided at the remote position forward from the driver's seat. Therefore, since the distance from the mowing height setter to the rotary regulator is long, the rotation operation of the mowing height setter is transmitted to the rotary regulator by a wire connection. As a result of the above explained constitution, there is a problem that an exact setup of the mowing height cannot be performed by generating of shakiness or change of the wire length resulting from aging.

In the view of the above explained problem of the conventional mower, the present invention is directed to a mower having a mowing height adjusting device being capable of adjusting the mowing height easily, quickly, and more exactly.

### MEANS FOR SOLVING THE PROBLEMS

To solve the above explained problem, the following aspects of the present inventions are provided.

The 1^{st} aspect of the present invention is a mower comprising:
a vehicle body(2) having a pair of right and left front wheels(10,10) and a pair of right and left rearwheels(6,6), and a floor (14) and holding a mower unit(1) movably in vertical direction; and
a driver's seat(12),
a steering handle (11) which steers said pair of right and left front wheels (10,10),
   wherein said mower unit (1) is supported below said vehicle body (2), and is connected to vehicle body (2) via a pair of right and left front links (38,38) and a pair of right and left lift links (40L,40R), which are disposed to constitute a four-places-link,
   said pair of right and left front links (38,38) connects between a front surface part of a mower deck (3) of said mower unit (1) and a front end part of frame of said vehicle body (2),
a pair of link mechanisms(41 L,41 R) are disposed respectively between said pair of right and left lift links(40L,40R) and a horizontal shaft(44) disposed in right and left direction on said vehicle body(2),
said mower unit(1) is moved vertically in a horizontal state, via said pair of right and left lift links(40L,40R), by a rotation of said link mechanisms(41L,41R) about said horizontal shaft(44),
each side of said horizontal shaft (44) is respectively connected to one (41 R) of said link mechanisms (41L,41R) and another one (41L) of said link mechanisms (41L,41R),
a lift lever(42) for rotating said horizontal shaft(44) is disposed in one of right and left sides of said driver's seat(12), and
an adjusting dial(54) of a mowing height adjusting device(50) which adjusts a mowing height of said mower unit(1), is disposed in another one of right and left sides of said driver's seat(12),
said mowing height adjusting device (50) is provided with
   i) a supporting shaft (51) which pivotally supports said adjustment dial (54) so as to rotate and
   ii) a link stopper (52) which is disposed on said supporting shaft (51) and is engaged with said another one (41 L) of said link mechanisms (41 R,41 L) by an operation of said adjusting dial (54) so as to regulate a lower side limit with respect to a. downward rotation range of said another one (41 L) of said link mechanisms (41R,41L) about said horizontal shaft (44),
a height adjustment part (53) being provided with a plurality of height adjustment concave parts (53a, 53b,.... , 53g) on the outer edge of said link stopper (52) at predetermined intervals, and each distance of the height adjustment concave parts from a center axis of said supporting shaft (51) differs mutually,
an engagement pin (41Le), which is disposed on an arm part (41Ld) constituting said another one (41 L) of said link mechanisms (41R,41L), is engaged with said height adjustment part (53) to regulate said another one (41 L) of said link mechanisms (41R,41L),
   characterized in that
each front part of said pair of right and left lift links (40L,40R) is rotatably supported by a front horizontal axis (39a) disposed on said vehicle body (2), and each rear part of said pair of right and left lift links (40L,40R) is connected to a rear horizontal axis (39b) of said mower deck (3),
a lower end of each rod (41Ra,41La) of said link mechanism (41R,41L) is connected to an end portion of said pair of right and left lift links (40L,40R), an upper end of said each rod (41Ra,41La) is connected with a plate member (41Rc,41Lc) having an elongated hole (41Rb,41Lb), and each arm (41Rd,41Ld) whose end portion is rotatably supported by said horizontal shaft (44) is engaged with said elongated hole (41 Rb,41 Lb), and
a lock releasing rod (42a) is inserted into said lift lever (42) slidably in the longitudinal direction thereof, and is urged so as to push up usually a lock releasing button (42b) disposed on a tip part of said lift lever (42), and an end portion of said lock releasing rod (42a) is connected to a pivotable hook member (47) which engages and disengages with an engaged concave part (46a) of a cam plate (46).

According to the mower mentioned above, the mower unit(1) is lifted up by the operator's manual operation using the lift lever(42) and then a mowing height of the mower unit(1) is adjusted and set by the operator's manual operation using the adjusting dial(54) with maintaining a high position of the mower unit 1 from the ground, and when the lift lever(42) is operated to lower the mower unit 1, the mower unit(1) is stopped at a position of the mowing height set by the adjusting dial(54). Accordingly, since the lift lever(42) and the adjusting dial(54) are disposed on the right side and left side of the driver's seat(12) respectively, the operator can change the mowing height of the mower unit(1), while remaining the state of sitting on the driver's seat(12) and the operation is convenient.

Further, according to the mower mentioned above, one(40R) of the pair of right and left lift links (40L, 40R) is moved in response to the lift-and-down operation of the lift lever(42) to be lifted up or downed via one of the link mechanisms(41 R), further the horizontal shaft(44) is also rotated by the lift-and-down operation of the lift lever(42), and then the rotation of the horizontal supporting axis(44) acts on another one(41L) of the link mechanisms(41 L, 41 R), and as a result, another one(40L) of the pair of right and left lift links(40L, 40R) is moved in response to the lift-and-down operation of the lift lever(42) via the another one(41 L) of the link mechanisms(41 L, 41 R) to move the mower unit(1) in vertical direction maintaining a horizontal state of the mower unit(1).

Further, according to the mower mentioned above, the engagement pin(41 Le) of the another one(41L) of the link mechanisms is engaged with any one of the plurality of the concave parts for the height adjustment(53a, 53b,....53g) of the link stopper(52), thereby the another one(41L) of the link mechanisms is locked and the one(41R) of the link mechanisms is also locked via the horizontal supporting axis(44), and as a result, lowering of the mower unit(1) is regulated.

The 2^{nd} aspect of the present invention is the mower according to the 1^{st} aspect of the present invention, wherein
said supporting shaft(51) is provided with said link stopper(52) integrally; and
a click mechanism(55), which regulates a rotating operation of said adjusting dial(54) and said supporting shaft (51), is provided.

According to the mower mentioned above, since the link stopper(52), the click mechanism(55), and the like which constitute the mowing height adjusting device(50) can be intensively disposed to the supporting shaft(51), miniaturization of the mowing height adjusting device(50) is possible.

The 3^{rd} aspect of the present invention is the mower according to the 1^{st} aspect of the present invention, comprising:
a display plate(56) which displays said mowing height of said mower unit(1) on one side of both sides of said adjusting dial(54).

According to the mower mentioned above, since the display plate(56) with a scale and the like is disposed, grasp of the mowing height to be set is easy when the operator operates the adjusting dial(54).

### ADVANTAGEOUS EFFECTS OF INVENTION

According to the 1^{st} aspect of the present invention, the mower unit(1) is lifted up by the operator's manual operation using the lift lever(42) and then a mowing height of the mower unit(1) is adjusted and set by the operator's manual operation using the adjusting dial(54) with maintaining a high position of the mower unit 1 from the ground, and when the lift lever(42) is operated to lower the mower unit 1, the mower unit(1) is stopped at a position of the mowing height set by the adjusting dial(54). Accordingly, since the lift lever(42) and the adjusting dial(54) are disposed on the right side and left side of the driver's seat(12) respectively, the operator can change the mowing height of the mower unit(1), while remaining the state of sitting on the driver's seat(12) and the operation is convenient.

Further, one(40R) of the pair of right and left lift links (40L, 40R) is moved in response to the lift-and-down operation of the lift lever(42) to be lifted up or downed via one(41R) of the link mechanisms(41L, 41R), further the horizontal supporting axis(44) is rotated by the lift-and-down operation of the lift lever(42), and then the rotation of the horizontal supporting axis(44) acts on another one(41L) of the link mechanisms(41 L, 41 R), and as a result, another one(40L) of the pair of right and left lift links(40L, 40R) is moved in response to the lift-and-down operation of the lift lever(42) via the another one(41L) of the link mechanisms(41L, 41R)to move the mower unit(1) in vertical direction maintaining a horizontal state of the mower unit(1). Therefore, the lift-and-down operation of the mower unit(1) can be ensured. Since the lift lever(42) and the mowing height adjusting device(50) are separately disposed on a right side and a left side of the driver's seat, respectively, the structure of the present invention is simpler than the case where the lift lever and the mowing height adjusting device are disposed at one place.

According to the 2^{nd} aspect of the present invention, since the link stopper(52) and the click mechanism(55) can be intensively disposed to the supporting shaft(51), miniaturization of the mowing height adjusting device(50) is possible.

### BRIEF DESCRIPTION OF THE DRAWINGS

FIG. 1 is a partial sectional left side view illustrating a riding-type mower according to an Embodiment of the present invention;
FIG. 2 is a plan view illustrating a riding-type mower according to an Embodiment of the present invention;
FIG. 3A is a right side view illustrating a collector of the mower in a state where the collector is placed at a grass or lawn discharge position according to an Embodiment of the present invention;
FIG. 3B is a right side view illustrating the collector of the mower in a state where the collector is placed at a grass or lawn collecting position according to an Embodiment of the present invention;
FIG. 4 is a left side view illustrating the mower according to an Embodiment of the present invention;
FIG. 5 is a right side view illustrating a mower unit, a lift link, a link mechanism, a lift lever and the like of the mower according to an Embodiment of the present invention;
FIG. 6 is an enlarged side view illustrating the lift lever of the mower according to an Embodiment of the present invention;
FIG. 7 is a perspective view illustrating a pair of left and right of link mechanisms and a horizontal shaft of the mower according to an Embodiment of the present invention;
FIG. 8 is a left side view illustrating a mower unit, a lift link, a link mechanism, a mowing height adjusting device and the like of the mower according to an Embodiment of the present invention;
FIG. 9 is an enlarged side view illustrating the mowing height adjusting device of the mower according to an Embodiment of the present invention;
FIG. 10 is an enlarged front view illustrating the mowing height adjusting device of the mower according to an Embodiment of the present invention;

### PREFERRED EMBODIMENTS OF THE INVENTION

Hereinafter, an embodiment of a riding-type mower in accordance with the present invention will be described by referring to the drawings.

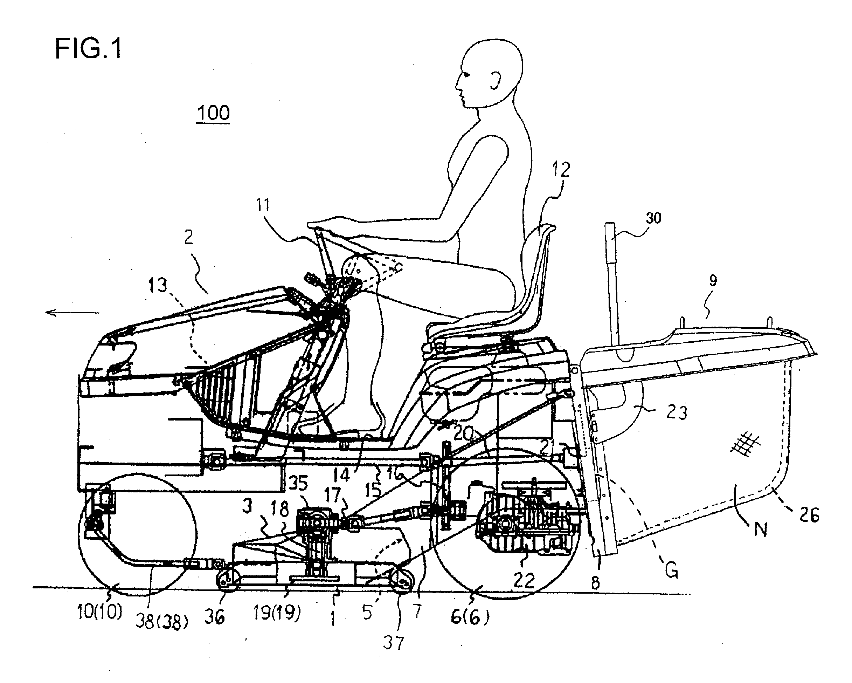

As shown in Fig.1, the riding-type mower 100 has a mower unit 1 as called a mid-mower type, which is supported below the vehicle body 2, and performs a mowing operation for cutting grass or lawn by rotation of each blade which rotates about a longitudinal axis. A collecting port 5 is formed at a center rear portion of a mower deck 3 of the mower unit 1, and the collecting port 5 is communicated with a collector 9 to be attached to a rear frame 8 of a rear end portion of the vehicle body 2 via a duct 7 between a pair of left and right wheels 6 and 6.

The vehicle body 2 has a pair of left and right front wheels 10, 10, a pair of left and right rear wheels 6, 6, a steering handle 11 steering the front wheels 10, 10, driver's seat 12, engine 13, floor 14 and the like. Below the floor 14, a power extraction shaft 15 is provided in a front-back direction, for extracting an output of the engine 13, and the power extracted by the power extraction shaft 15 is transmitted to a transmission shaft 20 via universal joint. The power transmitted to the transmission shaft 20 is transmitted to a power transmission case 21, which is connected with an end portion of the transmission shaft 20 and contains a transmission mechanism, and the power output from the power transmission case 21 drives the pair of left and right wheels 6, 6 via a Hydraulic Static Transmission(HST).

An input shaft 17 of the mower unit 1 is rotated via a power transmission belt 16 which is provided at a front end side of the transmission shaft 20, and blade shafts 18, 18 in the mower deck 3 are rotated by the rotation of the input shaft 17, so that the right and left blades 19, 19 disposed at a lower end portion of the blade shafts 18, 18 rotate in reverse direction to each other, whereby the grass or lawn is mowed.

The rear frame 8 is disposed on the rear end portions of a horizontal main frame of left and right lower portions of the vehicle body 2. The rear frame 8 is provided with a rectangular opening part(not illustrated) disposed at the position which faces a rear end portion of the duct 7, the rear end portion of the duct 7 is inserted in the rectangular opening part. The collector 9 is attached to the left and right sides of the rear frame 8 via a pair of left and right attachment brackets 23, 23.

The collector 9 is formed in box form with the pipe frames 26, 26 constituting the frame by using pipe material, and the collector 9 is surrounded with a ventilation net N in all the surfaces except for the front surface. The front face of the collector 9 has an opening part G, which is not surrounded with the net N, at a position corresponding to the opening part of the rear frame 8. The opening part G is constituted so as to be connected to a duct opening part of the end portion of the duct 7 connected to rear frame 8.

As shown in FIG. 1, in the mower 100 of the present Embodiment, in the state where the collector 9 is attached to the grass collecting position, the grass or lawn is mowed and air is blown by the rotation of the blades 19, 19 of the mower unit 1, and the grass clippings are discharged and housed into the collector 9 via the duct 7, the duct opening part and the opening part G of the collector 9. Then, the air which transports the grass is discharged from the ventilation net N.

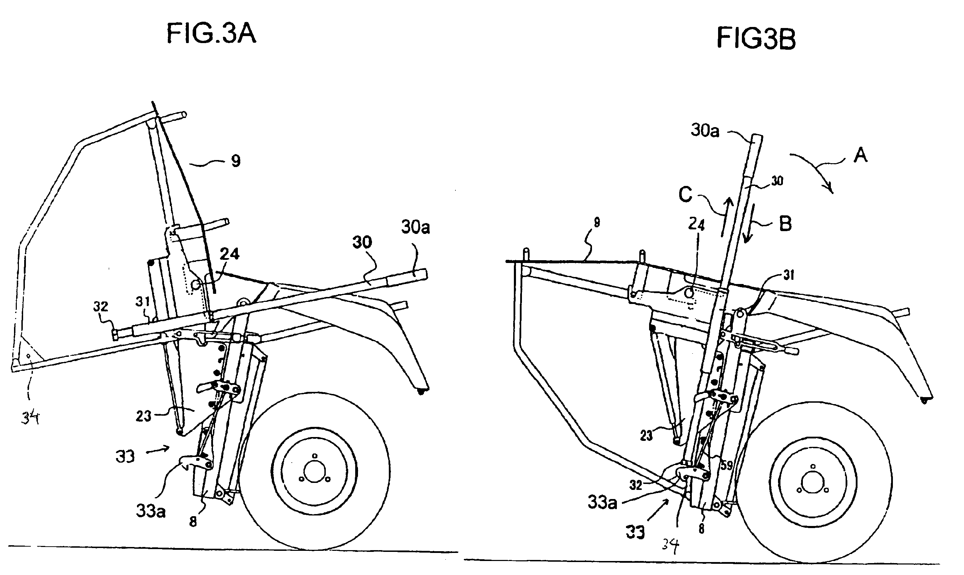

As shown in Figs.3A and 3B, a rotation control lever 30 which turns the collector 9 about a collector rotating shaft 24 is disposed at any one portion of left and right front portions of the collector 9(in the case of Figs.3A and 3B, at the right front portion). At the one side of the collector 9(in the case of Figs.3A and 3B, at the right side), a lever supporting bracket 31 which slidably supports the rotation control lever 30 in a longitudinal direction thereof.

When the collector 9 is placed at a grass or lawn collecting position(see Fig.3B), the operator can slide the rotation control lever 30 in a longitudinal direction(in the direction of arrow B shown in Fig.3B) so that a grip part 30a is put away in a low position.

As shown in Fig.3B, when the operator controls the rotation control lever 30, the operator turns the grip part 30a in a front direction(in the direction of arrow A shown in Fig.3B). An engaged ring 32 which projects in the direction intersecting the longitudinal direction of the rotation control lever 30 is disposed in the lower portion of the rotation control lever 30.

A lock mechanism 33 which can be moved in response to the sliding motion in the longitudinal direction of the rotation control lever 30 is constructed between the rear frame 8 and the collector 9. Further, when the operator lifts up the rotation control lever 30 in the direction of arrow C shown in Fig.3B, a lock state of a lock hook 33a of the lock mechanism 33 with a lock pin 34 is released in response to the lifting up operation of the rotation control lever 30. Thereby, the rotation of the collector 9 about the collector rotating shaft 24 can be locked or released.

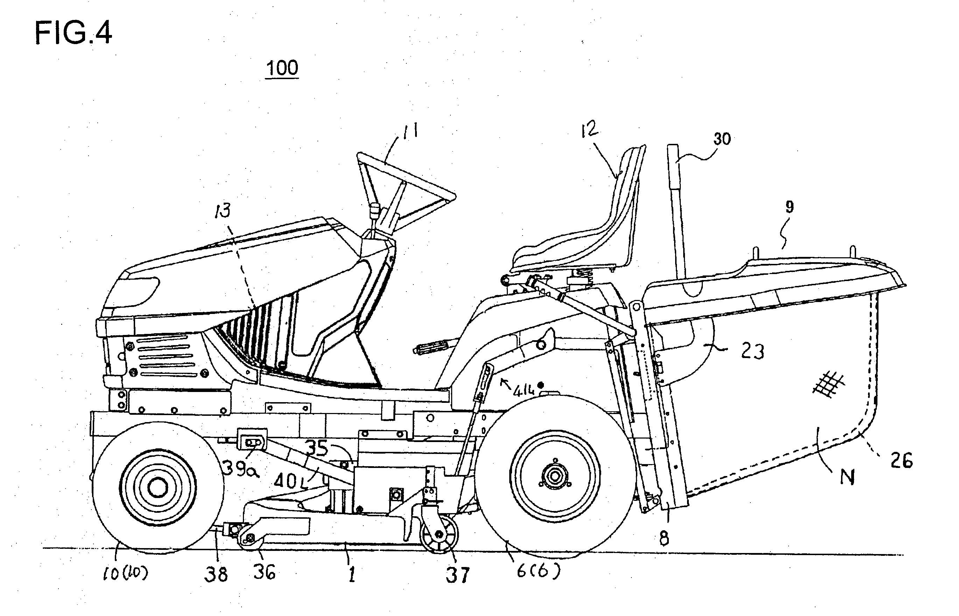

Next, a supporting construction of the mower unit 1 will be described by referring to Figs.1, 4 and 5.

A mower deck 3 is formed so as to surround the perimeter side and the upper side of a rotation region of the blades 19, 19 of mower unit 1. The mower deck 3 is reinforced by the framework of a pair of left and right mower transmission cases 35, 35 which rotatably support a pair of left and right blades shafts 18, 18 respectively.

A pair of left and right front gauge rollers 36, 36 and a pair of left and right rear gauge rollers 37, 37 which support the front portion and the rear portion of the mower unit 1.

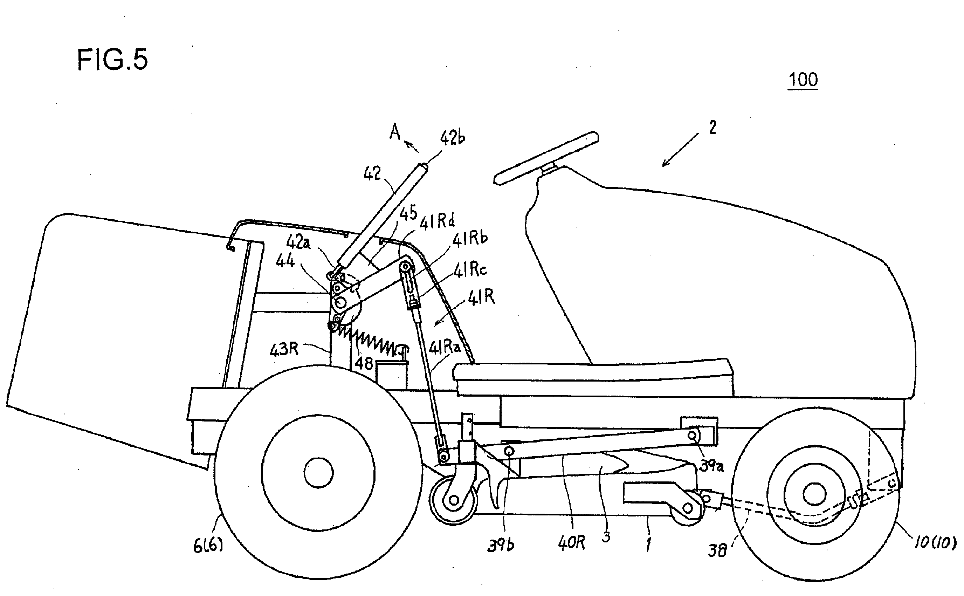

A front surface part of the mower deck 3 is connected with a front end part of the horizontal main frame of the vehicle body 2 via a pair of left and right front links 38, 38 so as to be capable of being lifted up and down. A front part of the lift link 40(including a pair of left and right lift links 40R, 40L) is rotatably supported by a front horizontal axis 39a. Each rear side of the pair of left and right lift links 40R, 40L which are constituted in parallel with the front links 38, 38 is connected to a rear horizontal axis 39b(see Fig.5) disposed on a rear upper surface of the mower deck 3. A lift lever 42 is connected with a rear end portion of the lift link 40(in the case of Fig.5, a rear end portion of the lift link 40R) via a link mechanism 41 (in the case of Fig.5, via a link mechanism 41 R) so that the mower unit 1 is capable of being lifted up and down by the operator's operation of the lift lever 42.

The above explained lift link 40, link mechanism 41, front horizontal axis 39a, and rear horizontal axis 39b are disposed in left and right side of the vehicle body 2 and the mower deck 3 as one pair, respectively.

When it is necessary to distinguish between the left side part and the right side part of constitution of one pair of right and left, a letter "L" or "R" is attached to the reference sign corresponding to the left or right side part, in this specification and drawings. For example, a reference sign "41R" of a link mechanism 41 R means the right side part of the pair of left and right link mechanisms 41 R and 41L, and a reference sign "41 L" of a link mechanism 41 L means the left side part of the pair of left and right link mechanisms 41 R and 40L.

As shown in Fig.5, a link mechanism 41 R is connected with a right side lift link 40R of the pair of left and right lift links 40L and 40R, and as a result, the mower deck 3 and mower unit 1 move in response to the movement of the lift lever 42 by the operator. That is, a lower end of a rod 41 Ra of the link mechanism 41 R is connected with an end portion of the lift link 40R, a upper end of the rod 41 Ra is connected with a plate member 41Rc having a n elongated hole 41 Rb, and an arm 41 Rd which constitutes the link mechanism 41 R is engaged with the elongated hole 41 Rb.

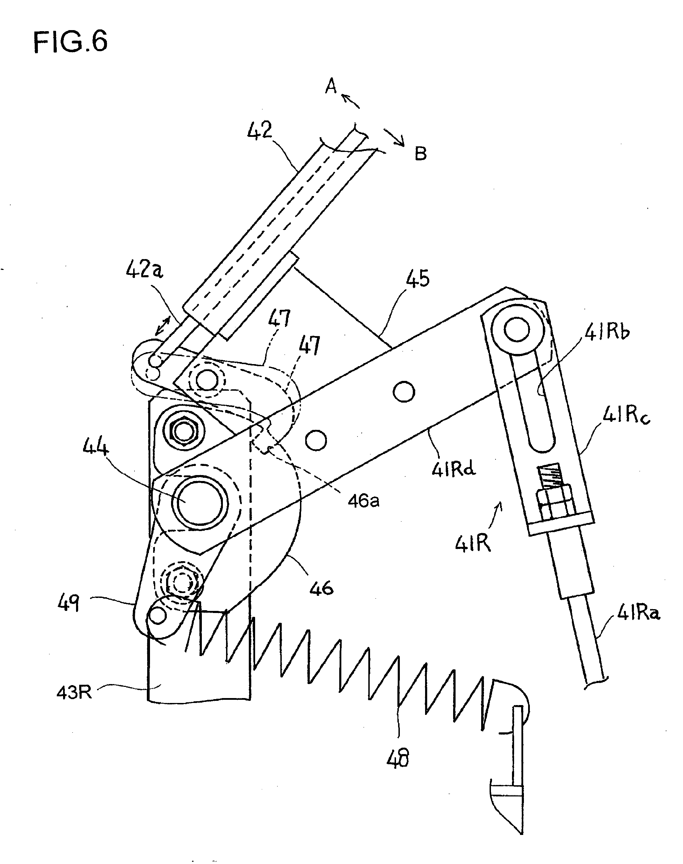

As shown in Figs.5 and 6, a base end portion of the arm 41 Rd is rotatably supported about a cylindrical horizontal shaft 44 which is rotatalby supported by a right side holder 43R reinforced by base plate suitably fixed to the vehicle body 2. A base portion side of the lift lever 42 is fixed to a middle portion of the arm 41 Rd via a fixing plate 45. When the operator rotates the lift lever 42 about the cylindrical horizontal shaft 44 in the direction arrow A(see Fig.6), the arm 41 Rd is directly lifted up, and then the lift link 40R is lifted up in response to the movement of the arm 41 Rd via rod 41 Ra, and as a result, the mower unit 1 and mower deck 3 are lifted up. When the operator rotates the lift lever 42 about the cylindrical horizontal shaft 44 in the direction arrow B(see Fig.6), the mower unit 1 and mower deck 3 are lowered.

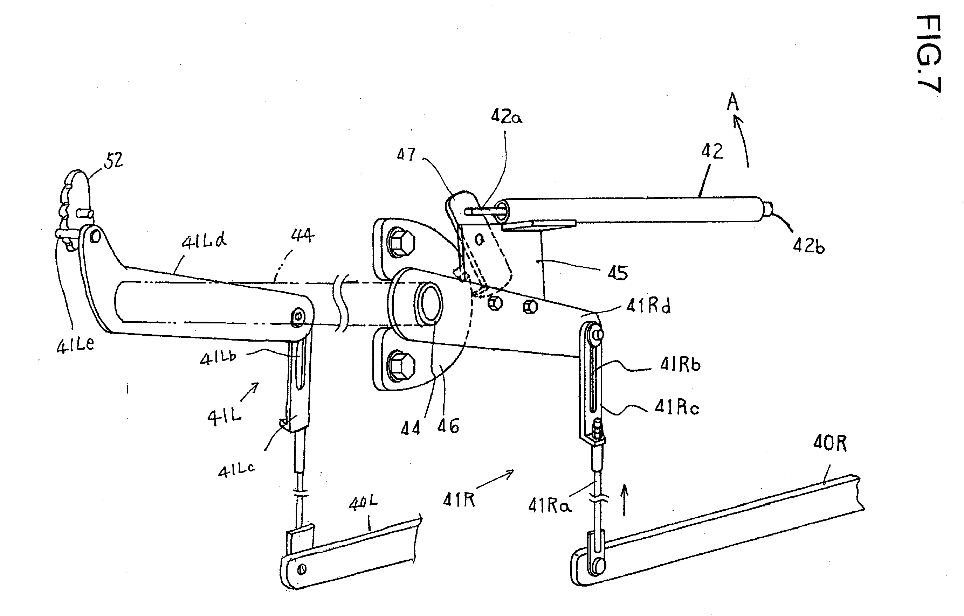

As shown in Figs.6 and 7, a lock releasing rod 42a is inserted into the lift lever 42 slidably in the longitudinal direction thereof, and is urged so as to push up usually a lock releasing button 42b disposed on a tip part of the lift lever 42. An end portion of the lock releasing rod 42a rotates a pivotable hook member 47 which engages and disengaged with an engaged concave part 46a of a cam plate 46. That is, the pivotable hook member 47 engages and disengaged with an engaged concave part 46a formed in the predetermined place of the perimeter edge of the cam plate 46 fixed to the right side holder 43R. When the pivotable hook member 47 engages with the engaged concave part 46a, the lift lever 42 is locked and then the arm 41 Rd is locked, and as a result, the movements of the link mechanism 41 R and the lift link 40R are regulated. The engaged concave part 46a is capable of being formed at a position which corresponds to the highest lifting position U of the mower unit 1 lifted up(lift-up-side-lock-mechanism) by the lift link 40R(see Figs.5 and 6).

Since the arm 41 Rd is engaged with the elongated hole 41 Rb, an evacuation movement is possible in the upper direction in the range of the elongated hole 41 Rb even if action from the ground acted on the mower unit 1, for example, when a convex part appears on the ground suddenly.

A balance spring 48 is disposed between a sub-arm 49 which the arm 41 Rd is provided with integrally and the vehicle body 2, and urges the tip part of the arm 41 Rd of the link mechanism 41 R in the direction in which the mower unit 1 is lifted up.

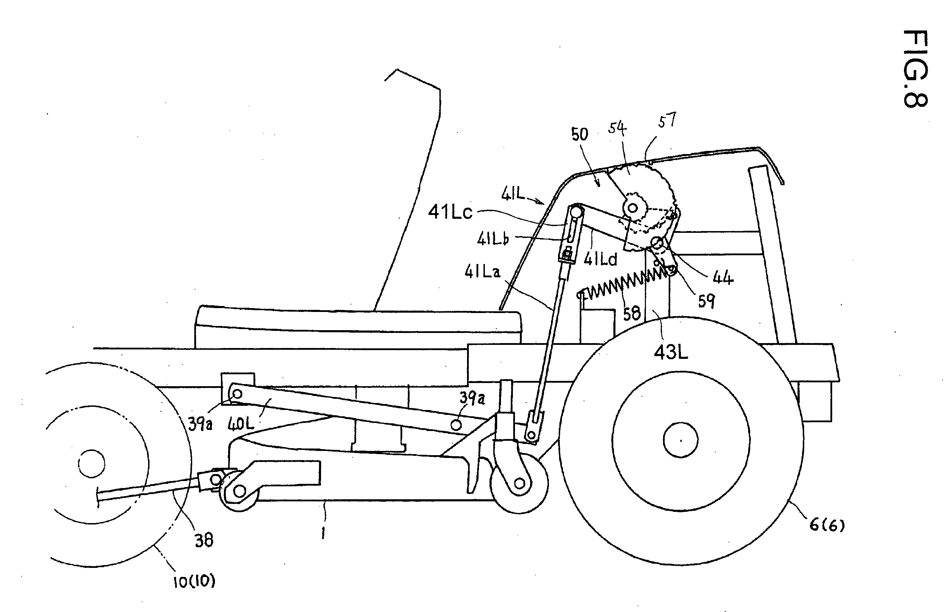

As shown in Fig.8, a mowing height adjusting device 50 is disposed in the left lift link 40L side of the vehicle body 2. The mowing height adjusting device 50 engages with the link mechanism 41L connected to a rear end of the lift link 40L to regulate the movement of the lift link 40L in the lowering direction. That is, a lower end of the rod 41 La of the link mechanism 41 L is engaged with the rear end part of the lift link 40L, an upper end of the rod 41 La is engaged with a plate member 41 Lc having an elongated hole 41 Lb, and an arm 41 Ld constituting the link mechanism 41L is engaged with the elongated hole 41 Lb.

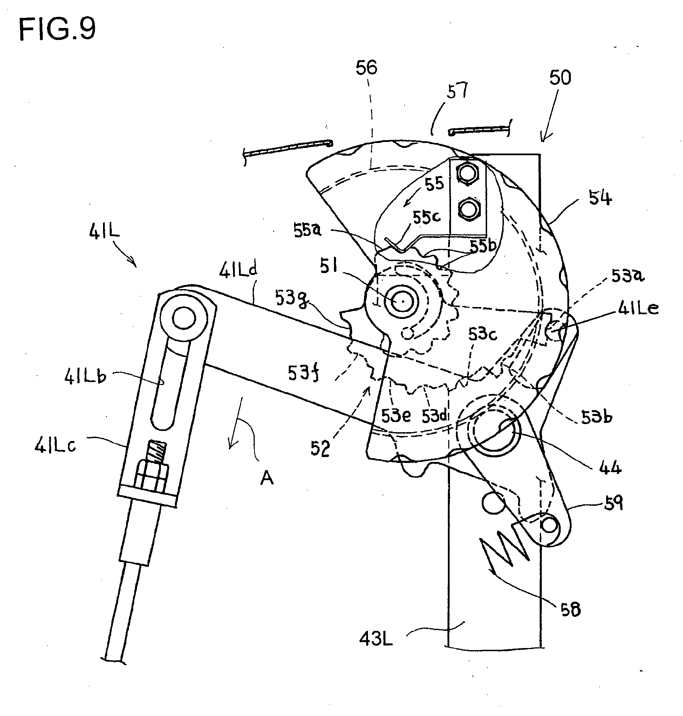

The arm 41 Ld is rotatably supported in the left side about the cylindrical horizontal shaft 44 which is rotatalby supported by a left side holder 43L reinforced by base plate suitably fixed to the vehicle body 2. And as shown in Fig.9, the arm 41 Ld has a long arm part and a short arm part projecting in the about right-angled direction from the long arm part, and is formed in shape such as a letter of L in alphabet. The arm 41 Ld is provided with a latching pin part 41 Le at a tip end side of the short arm part.

Based on the lift-and-down operation of the lift lever 42, the right side lift link 40R of the a pair of left and right lift link 40L,40R is vertically pivoted about the front horizontal axis 39a via the right side link mechanism 41 R of the pair of left and right link mechanisms 41 L, 41 R, and also rotates the cylindrical horizontal shaft 44. Since the left and right sides of the cylindrical horizontal shaft 44 are provided with the left side link mechanism 41 L and the right side link mechanism 41 R, respectively, the left side lift link 40L is vertically pivoted about the front horizontal axis 39a via the left side link mechanism 41 L by the rotation of the cylindrical horizontal shaft 44, thereby, the mower unit 1 is capable of being moved vertically, while being maintained at a horizontal state.

As shown in Fig.9, the latching pin part 41 Le is engaged with a height adjustment part 53 of a link stopper 52, which is disposed near the cylindrical horizontal shaft 44 and is rotated about a supporting shaft 51, and is locked to regulate the rotation of arm 41Ld in the direction of arrow A. The height adjustment part 53 of a link stopper 52 is provided with a plurality of height adjustment concave parts 53a, 53b,...53g(see Fig.9) on the outer edge part of the link stopper 52 at predetermined intervals, and each distance of the height adjustment concave parts 53a, 53b,...53g from the center axis of the supporting shaft 51 differs mutually. Any one of the height adjustment concave parts 53a, 53b,...53g is selected and set based on the rotation operation of the link stopper 52 about the supporting shaft 51, and thereby, a lowering position of the mower unit 1 and mower deck 3 is regulated to be set the mowing height of the mower unit.

That is, as the distance of the height adjustment concave part(53a, 53b,...53g) from the center axis of the supporting shaft 51 is long, the engaged position between the arm 41 Ld and the elongated hole 41 Rb becomes higher, in other word, the mowing height of the mower unit becomes higher.

Fig.9 shows the highest state in a range of the mowing height of the mower unit which can be set up, because the latching pin part 41 Le is engaged with the height adjustment concave part 53a which has the longest distance from the center axis of the supporting shaft 51 among the plurality of the height adjustment concave parts 53a, 53b,...53g.

On the contrary, as the distance of the height adjustment concave part(53a, 53b,...53g) from the center axis of the supporting shaft 51 is short, the engaged position between the arm 41 Ld and the elongated hole 41 Lb becomes lower, in other word, the mowing height of the mower unit becomes lower.

As described above, the mowing height adjusting device 50 is constructed by the left side link mechanism 41 L, the latching pin part 41 Le, the link stopper 52, a fan-like adjustment dial 54 which rotates the link stopper 52 about the supporting shaft 51, a click mechanism 55, and the like,

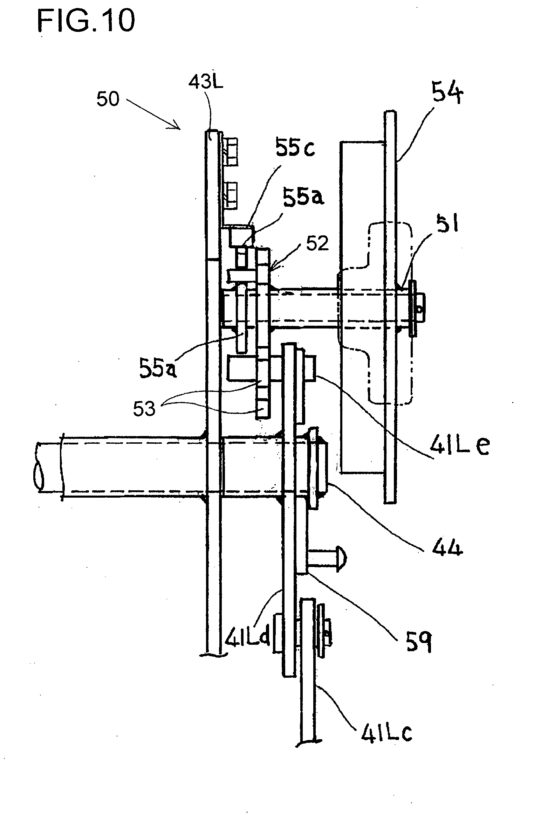

As shown in figs. 9 and 10, the click mechanism 55 has a second cam plate 55a and a board spring-like latching member 55c which can be engaged with each of the sprocket-like concave parts 55b, 55b...,55b formed on the outer edge part of the second cam plate 55a. The end portion of the board spring-like latching member 55c is fixed to the left side holder 43L. The adjustment dial 54, the link stopper 52, and the second cam plate 55a of the click mechanism 55 are fixed to the horizontally disposed supporting shaft 51 at the predetermined intervals in an order from outside, respectively. And then the short arm part of the arm 41 Ld is constituted so that it can come into the space between the adjustment dial 54 and the link stopper 52 in the direction of the axis of the supporting shaft 51.

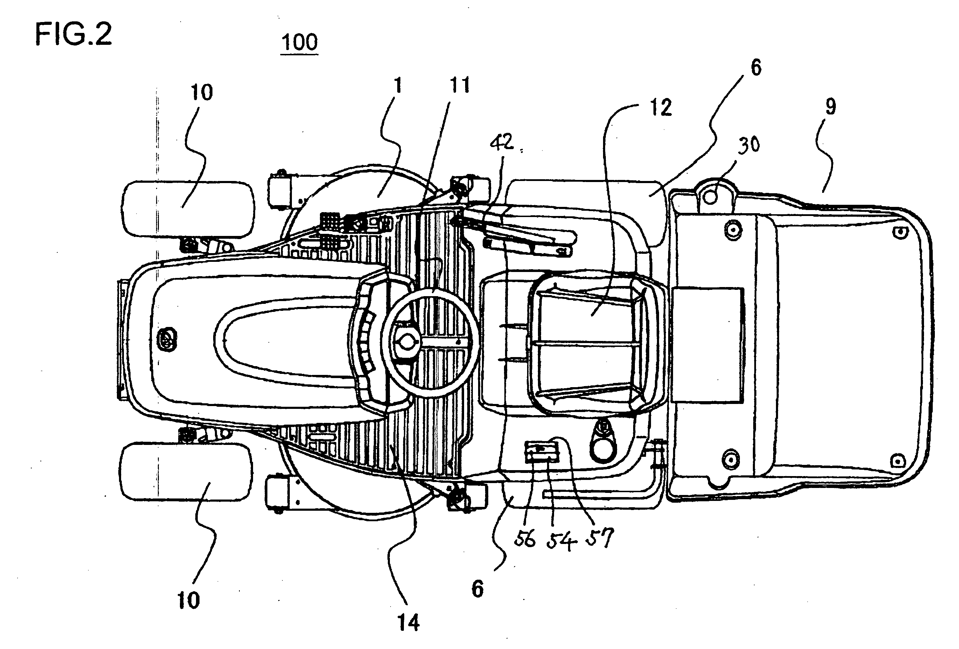

Since a display plate 56 having an arc-shaped surface on which a scale or the like is given is disposed at one side of the adjustment dial 54(in the case of Figs.2 and 10, at the driver's seat side), the operator can check the mowing height of the mower unit 1.

That is, as shown in Figs.2 and 9, an opening part 57 is formed in vehicle body cover, such as a fender, and a part of outer edge part, which is upper part of the adjustment dial 54, is exposed from the opening part 57, and a part of the display plate 56 can be sighted from the opening part 57. Thereby, when the operator rotates the adjustment dial 54 to select the mowing height of the mower unit 1, the display of the scale corresponding to the selected mowing height appears one by one with the operator's operation of the rotation through the opening part 57.

As shown in Fig.9, a second balance spring 58 is disposed between a second sub-arm 59 which the left side arm 41 Ld is provided with integrally and the vehicle body 2, and urges the tip part of the left side arm 41 Ld of the link mechanism 41 L in the direction in which the mower unit 1 is lifted up. Since the second balance spring 58 also urges the cylindrical horizontal shaft 44 in the direction in which the mower unit 1 is lifted up conjointly with the balance spring 48, the lifting operation of the lift lever 42 is assisted by the second balance spring 58.

As for the left lift link 40L and the right lift link 40R, each length, fulcrum position, link ratio, and the like are constituted identically, respectively. And as for the left link mechanism 41 L and the right link mechanism 41 R, each length, fulcrum position, link ratio, length of the elongated holes 41 Lb, 41 Rb, and the like are constituted identically, respectively. Therefore, the mower unit 1 and the mower deck 3 are capable of being vertically moved according to the operator's operation of the lift lever 42 disposed on the right side of the vehicle body 2. After the lift lever 42 is lifted up to hold the mower unit 1 at the lifting position D, the adjustment dial 54 is rotated to adjust the desired mowing height of the mower unit 1, and then the lift lever 42 is operated in the downward direction by the operator. Incidentally, the lifting position D may accord with the highest lifting position U(see Fig.5).

At this time, the mower unit 1 is lowered, however, the latching pin part 41 Le is engaged with any one of the height adjustment concave parts 53a, 53b ..., 53g of the link stopper 52. Thereby, the lower side limit with respect to the downward rotation range of the left link mechanism 41 L is regulated by the latching pin part 41 Le, and as a result, the mower unit 1 is capable of being set the mowing height of the mower unit 1.

According to the above explained embodiment, the operator sitting on the driver's seat 12 can operate to lift up the lift lever 42 by the right hand to hold the mower unit 1 at the highest position D, and can rotate the adjustment dial 54 about the supporting shaft 51 by the left hand with the same posture to adjust the desired mowing height of the mower unit 1. Therefore, since the mower unit 1 is capable of being lifted up easily without using a hydraulics type cylinder mechanism and the like, and the operation of the adjustment dial 54 can be performed with the same posture of the operator, it is convenient and the operation for the mowing height of the mower unit 1 can be improved. And also, when the latching pin part 41 Le is engaged with any one of the height adjustment concave parts 53a, 53b ..., 53g once, the latching pin part 41 Le is locked. Therefore, since the unexpected operation of the lift lever 42 by the operator can be prevented, safety improves.

Further, since the link stopper 52, the click mechanism 55, and the like which constitute the mowing height adjusting device 50 can be intensively disposed to the supporting shaft 51, miniaturization of the mowing height adjusting device 50 is possible.

Since the adjustment dial 54 is a fan shape namely a shape lacked the part of a circular board, the maintenance of click mechanism 55 can be performed easily and workability improves. The adjustment dial 54 can be constituted by a complete circular board without a notch part.

### Reference Signs List

- 1: mower unit
- 6: rear wheel
- 10: front wheel
- 12: driver's seat
- 38: front link
- 40: lift link
- 41: link mechanism
- 42: lift lever
- 44: cylindrical horizontal shaft
- 50: mowing height adjusting device
- 51: supporting shaft
- 52: link stopper
- 53: height adjustment part
- 54: adjustment dial

## Claims

1. A mower comprising:
a vehicle body (2) having a pair of right and left front wheels (10,10), a pair of right and left rear wheels (6, 6), and a floor (14), and holding a mower unit (1) movably in vertical direction;
a driver's seat (12); and
a steering handle (11) which steers said pair of right and left front wheels (10,10),
wherein said mower unit (1) is supported below said vehicle body (2), and is connected to said vehicle body (2) via a pair of right and left front links (38,38) and a pair of right and left lift links (40L,40R), which are disposed to constitute a four-places-link,
said pair of right and left front links (38,38) connects between a front surface part of a mower deck (3) of said mower unit (1) and a front end part of frame of said vehicle body (2),
a pair of link mechanisms (41 L, 41 R) are disposed respectively between said pair of right and left lift links (40L, 40R) and a horizontal shaft (44) disposed in right and left direction on said vehicle body (2),
said mower unit (1) is moved vertically in a horizontal state, via said pair of right and left lift links (40L,40R), by a rotation of said link mechanisms (41L,41R) about said horizontal shaft (44),
each side of said horizontal shaft (44) is respectively connected to one (41 R) of said link mechanisms (41L,41R) and another one (41L) of said link mechanisms (41L,41R),
a lift lever (42) for rotating said horizontal shaft (44) is connected to said one (41 R) of said link mechanisms (41 L,41 R),
said lift lever (42) is disposed in one of right and left sides of said driver's seat (12),
an adjusting dial (54) of a mowing height adjusting device (50) which adjusts a mowing height of said mower unit (1), is disposed in another one of right and left sides of said driver' s seat (12) said mowing height adjusting device (50) is provided with
i) a supporting shaft (51) which pivotally supports said adjustment dial (54) so as to rotate and
ii) a link stopper (52) which is disposed on said supporting shaft (51) and is engaged with said another one (41 L) of said link mechanisms (41R,41L) by an operation of said adjusting dial (54) so as to regulate a lower side limit with respect to a. downward rotation range of said another one (41 L) of said link mechanisms (41R,41L) about said horizontal shaft (44),
a height adjustment part (53) being provided with a plurality of height adjustment concave parts (53a, 53b,.... , 53g) on the outer edge of said link stopper (52) at predetermined intervals, and each distance of the height adjustment concave parts from a center axis of said supporting shaft (51) differs mutually,
an engagement pin (41Le), which is disposed on an arm part (41Ld) constituting said another one (41 L) of said link mechanisms (41R,41L), is engaged with said height adjustment part (53) to regulate said another one (41 L) of said link mechanisms (41R,41L),
**characterized in that**
each front part of said pair of right and left lift links (40L,40R) is rotatably supported by a front horizontal axis (39a) disposed on said vehicle body (2), and each rear part of said pair of right and left lift links (40L,40R) is connected to a rear horizontal axis (39b) of said mower deck (3),
a lower end of each rod (41 Ra,41 La) of said link mechanism (41R,41L) is connected to an end portion of said pair of right and left lift links (40L,40R), an upper end of said each rod (41 Ra,41 La) is connected with a plate member (41 Rc,41 Lc) having an elongated hole (41Rb,41Lb), and each arm (41Rd,41Ld) whose end portion is rotatably supported by said horizontal shaft (44) is engaged with said elongated hole (41 Rb,41 Lb), and
a lock releasing rod (42a) is inserted into said lift lever (42) slidably in the longitudinal direction thereof, and is urged so as to push up usually a lock releasing button (42b) disposed on a tip part of said lift lever (42), and an end portion of said lock releasing rod (42a) is connected to a pivotable hook member (47) which engages and disengages with an engaged concave part (46a) of a cam plate (46),

2. The mower according to claim 1, wherein said supporting shaft (51) is provided with said link stopper (52) integrally; and
a click mechanism (55), which regulates a rotating operation of said adjusting dial (54) and said supporting shaft (51), is provided.

3. The mower according to claim 1 or 2, comprising:
a display plate (56) which displays said mowing height of said mower unit (1) on one side of both sides of said adjusting dial (54).

## Patentansprüche

1. Mähmaschine, die umfasst:
einen Fahrzeugkörper (2), der ein Paar aus einem rechten und einem linken Vorderrad (10, 10), ein Paar aus einem rechten und einem linken Hinterrad (6, 6) sowie einen Boden (14) aufweist und eine Mäh-Einheit (1) in vertikaler Richtung beweglich trägt;
einen Fahrersitz (12); und
ein Lenkrad (11), mit dem das Paar aus rechtem und linkem Vorderrad (10, 10) gelenkt wird,
wobei die Mäh-Einheit (1) unterhalb des Fahrzeugkörpers (2) gelagert ist und mit dem Fahrzeugkörper (2) über ein Paar aus einem rechten und einem linken vorderen Gelenk (38, 38) und ein Paar aus einem rechten und einem linken Hebe-Gelenk (40L, 40R) verbunden ist, die so angeordnet sind, dass sie ein Vierpunktegelenk bilden,
wobei das Paar aus rechtem und linkem vorderen Gelenk (38, 38) Verbindung zwischen einem vorderen Flächenteil eines Mähwerks (3) der Mäh-Einheit (1) und einem vorderen Endteil eines Rahmens des Fahrzeugkörpers (2) herstellt,
paarige Gelenkmechanismen (41L, 41R) jeweils zwischen dem Paar aus rechtem und linkem Hebe-Gelenk (40L, 40R) und einer horizontalen Welle (44) angeordnet sind, die in Querrichtung an dem Fahrzeugkörper (2) angeordnet ist,
die Mäh-Einheit (1) in einem horizontalen Zustand über das Paar aus rechtem und linkem Hebe-Gelenk (40L, 40R) durch eine Drehung des Gelenkmechanismus (41 L, 41 R) um die horizontale Welle (44) herum vertikal bewegt wird,
jede Seite der horizontalen Welle (44) jeweils mit einem (41 R) der Gelenkmechanismen (41 L, 41 R) und einem anderen (41 L) der Gelenkmechanismen (41 L, 41 R) verbunden ist, ein Hebe-Hebel (42) zum Drehen der horizontalen Welle (44) mit dem einen (41 R) der Gelenkmechanismen (41 L, 41 R) verbunden ist,
der Hebe-Hebel (42) an der rechten oder der linken Seite des Fahrersitzes (12) angeordnet ist,
eine Einstellscheibe (54) einer Vorrichtung (50) zum Einstellen einer Mäh-Höhe, mit der eine Mäh-Höhe der Mäh-Einheit (1) eingestellt wird, an der anderen von der rechten und der linken Seite des Fahrersitzes (12) angeordnet ist und die Vorrichtung (50) zum Einstellen einer Mäh-Höhe versehen ist mit:
a) einer Tragewelle (51), die die Einstellscheibe (54) schwenkbar so trägt, dass sie sich dreht, und
b) einem Gelenk-Anschlag (52), der an der Tragewelle (51) angeordnet ist und mit dem anderen (41 L) von den Gelenkmechanismen (41 R, 41 L) durch eine Betätigung der Einstellscheibe (54) in Eingriff gebracht wird, um eine Unterseiten-Grenze in Bezug auf einen Abwärts-Drehbereich des anderen (41 L) der Gelenkmechanismen (41 R, 41 L) um die horizontale Welle (44) herum zu regulieren,
ein Höhen-Einstellteil (53), das mit einer Vielzahl konkaver Höhen-Einstellteile (53a, 53b, ... , 53g) an dem äußeren Rand des Gelenk-Anschlags (52) in vorgegebenen Höhen versehen ist, wobei sich alle Abstände der konkaven Höheneinstell-Teile zu einer Mittelachse der Tragewelle (51) voneinander unterscheiden,
wobei ein Eingriffsbolzen (41 Le), der an einem Arm-Teil (41 Ld) angeordnet ist, der den anderen (41 L) der Gelenkmechanismen (41 R, 41 L) bildet, mit dem Höhen-Einstellteil (53) in Eingriff ist, um den anderen (41 L) der Gelenkmechanismen (41 R, 41 L) zu regulieren,
**dadurch gekennzeichnet, dass**
jeder Vorderteil des Paares aus rechtem und linkem Hebe-Gelenk (40L, 40R) über eine vordere horizontale Achse (39a), die an dem Fahrzeugkörper (2) angeordnet ist, drehbar gelagert ist, und jeder hintere Teil des Paares aus rechtem und linkem Hebe-Gelenk (40L, 40R) mit einer hinteren horizontalen Achse (39b) des Mähwerks (3) verbunden ist,
ein unteres Ende jeder Stange (41 Ra, 41 La) des Gelenkmechanismus (41 R, 41 L) mit einem Endabschnitt des Paares aus rechtem und linkem Hebe-Gelenk (40L, 40R) verbunden ist, ein oberes Ende jeder Stange (41 Ra, 41 La) mit einem Plattenelement (41 Rc, 41 Lc) verbunden ist, das ein Längsloch (41 Rb, 41 Lb) aufweist, und jeder Arm (41 Rd, 41 Ld), dessen Endabschnitt von der horizontalen Welle (44) drehbar getragen wird, mit dem Längsloch (41 Rb, 41 Lb) in Eingriff ist, und
eine Arretierungs-Lösestange (42a) in den Hebe-Hebel (42) in der Längsrichtung desselben verschiebbar eingeführt ist und so gedrückt wird, dass sie einen Arretier-Löseknopf (42b), der an einem vorderen Teil des Hebe-Hebels (42) angeordnet ist, normalerweise nach oben schiebt, und ein Endabschnitt der Arretierungs-Lösestange (42a) mit einem schwenkbaren Hakenelement (47) verbunden ist, das in und außer Eingriff mit einem in Eingriff befindlichen konkaven Teil (46a) einer Kurvenscheibe (46) kommt.

2. Mähmaschine nach Anspruch 1, wobei die Tragewelle (51) integral mit dem Gelenk-Anschlag (52) versehen ist; und
ein Einrastmechanismus (55) vorhanden ist, der eine Drehbetätigung der Einstellscheibe (54) und der Tragewelle (51) reguliert.

3. Mähmaschine nach Anspruch 1 oder 2, die umfasst:
eine Anzeigescheibe (56), die die Mäh-Höhe der Mäh-Einheit (1) an einer Seite von beiden Seiten der Einstellscheibe (54) anzeigt.

## Revendications

1. Tondeuse comprenant :
un châssis de véhicule (2) comprenant une paire de roues avant droite et gauche (10, 10), une paire de roues arrière droite et gauche (6, 6) et un plancher (14), et soutenant une unité de tondeuse (1) pouvant être mobile dans le sens vertical,
le siège d'un conducteur (12), et
une poignée de direction (11) qui dirige ladite paire de roues avant droite et gauche (10, 10),
dans laquelle ladite unité de tondeuse (1) est supportée en dessous dudit châssis de véhicule (2) et elle est raccordée au dit châssis de véhicule (2) par l'intermédiaire d'une paire de liaisons avant droite et gauche (38, 38) et d'une paire de liaisons de levage droite et gauche (40L, 40R) qui sont disposées pour constituer une liaison quadruple,
ladite paire de liaisons avant droite et gauche (38, 38) est reliée entre la pièce de surface avant d'un tablier (3) de ladite unité de tondeuse (1) et la pièce d'extrémité avant de l'ossature dudit châssis de véhicule (2),
deux mécanismes de liaison (41L, 41R) sont disposés respectivement entre ladite paire de liaisons de levage droite et gauche (40L, 40R) et un arbre horizontal (44) disposé dans la direction droite et gauche sur ledit châssis de véhicule (2),
ladite unité de tondeuse (1) est déplacée verticalement tout en restant horizontale par l'intermédiaire de ladite paire de liaisons de levage droite et gauche (40L, 40R) grâce à une rotation desdits mécanismes de liaison (41L, 41R) autour dudit arbre horizontal (44)
chaque côté dudit arbre horizontal (44) est respectivement raccordé à l'un (41R) desdits mécanismes de liaison (41L, 41R) et à un autre desdits mécanismes de liaison (41L, 41R),
un levier de levage (42), destiné à faire tourner ledit arbre horizontal (44) est raccordé au dit premier (41R) desdits mécanismes de liaison (41L, 41R),
ledit levier de levage (42) est disposé dans l'un des côtés droit et gauche dudit siège du conducteur (12)
un cadran d'ajustement (54) d'un dispositif d'ajustement de hauteur de tonte (50), qui ajuste la hauteur de tonte de ladite unité de tondeuse (1), est disposé dans un autre des côtés droit et gauche dudit siège du conducteur (12), ledit dispositif d'ajustement de hauteur de tonte (50) étant muni de :
i) un arbre de support (51) qui porte avec une possibilité de pivotement ledit cadran d'ajustement (54) de telle sorte qu'il tourne, et
ii) un arrêt de liaison (52) qui est disposé sur ledit arbre de support (51) et qui est en prise avec ledit autre (41L) desdits mécanismes de liaison (41L, 41R) grâce à une opération dudit cadran d'ajustement (54) de sorte à réguler une limite de côté inférieur par rapport à une plage de rotation vers le bas dudit autre (41L) desdits mécanismes de liaison (41L, 41R) autour dudit arbre horizontal,
une pièce d'ajustement de hauteur (53) étant munie d'une pluralité de pièces concaves d'ajustement de la hauteur (53a, 53b,..., 53g) sur le bord externe dudit arrêt de liaison (52) à des intervalles prédéterminés, et chaque distance des pièces concaves d'ajustement à partir de la hauteur de l'axe central dudit arbre de support (51) diffère mutuellement des autres,
une broche de mise en prise (41Le), qui est disposée sur une pièce de bras (41Ld) constituant ledit autre (41L) desdits mécanismes de liaison (41L, 41R), se voit engrener avec ladite pièce d'ajustement de la hauteur (53) afin de réguler ledit autre (41L) desdits mécanismes de liaison (41L, 41R),
**caractérisée en ce que**
chaque pièce avant de ladite paire de liaisons de levage droite et gauche (40L, 40R) est supportée avec une possibilité de rotation par un axe horizontal avant (39a) placé sur ledit châssis de véhicule (2), et chaque pièce arrière de ladite paire de liaisons de levage droite et gauche (40L, 40R) est raccordée à un axe horizontal arrière (39b) dudit tablier de tondeuse (3),
l'extrémité inférieure de chaque tige (41Ra, 41La) desdits mécanismes de liaison (41L, 41R) est raccordée à une partie d'extrémité de ladite paire de liaisons de levage droite et gauche (40L, 40R), l'extrémité supérieure de chaque dite tige (41Ra, 41La) est raccordée à un élément de plaque (41Rc, 41Lc) comportant un trou allongé (41Rb, 41Lb), et chaque bras (41Rd, 41Ld) dont l'extrémité est supportée avec une possibilité de rotation par ledit arbre horizontal (44) se trouve engrenée avec ledit trou allongé (41Rb, 41Lb), et
une tige de libération de verrouillage (42a) est insérée dans ledit levier de levage (42) en pouvant coulisser dans le sens longitudinal de celui ci, et elle est sollicitée de façon à relever d'ordinaire un bouton de libération de verrouillage (42b) disposé sur une pièce en pointe dudit levier de levage (42) et une partie d'extrémité de ladite tige de libération de verrouillage (42a) est raccordée à un élément de crochet pivotant (47) qui se met en prise et hors prise avec une pièce concave (46a) engrenée d'une plaque de came (46).

2. Tondeuse selon la revendication 1, dans laquelle ledit arbre de support (51) est muni dudit arrêt de liaison (52), le tout en une pièce, et
un mécanisme à cliquet (55) est prévu, lequel régule l'opération de rotation dudit cadran d'ajustement (54) et dudit arbre de support (51).

3. Tondeuse selon la revendication 1 ou 2, comprenant :
une plaque d'affichage (56) qui montre ladite hauteur de tonte de ladite unité de tondeuse (1) sur l'un des deux côtés dudit cadran d'ajustement (54).
